# EUROPEAN PATENT SPECIFICATION

(11) **EP 3 511 938 B1**
(45) Date of publication and mention of the grant of the patent: **19.01.2022**
(21) Application number: 18211798.6
(22) Date of filing: 11.12.2018
(51) Int. Cl.: G08B 1/08, G08B 25/08, G08B 13/196, G10L 25/51, G10L 25/78, G10L 25/21, G10L 25/18

(54) **AUDIO EVENTS TRIGGERING VIDEO ANALYTICS**
AUDIOEREIGNISSE, DIE EINE VIDEOANALYSE AUSLÖSEN
ÉVÉNEMENTS AUDIO DÉCLENCHANT UNE ANALYSE VIDÉO

(30) Priority: 12.01.2018 US 201815869890
(43) Date of publication of application: 17.07.2019
(73) Proprietor: INTEL Corporation, Santa Clara, CA 95054 (US)
(72) Inventor: HUANG, Jonathan, Pleasanton, CA California 94588 (US); BELTMAN, Willem, West Linn, OR Oregon 97068 (US); BAR BRACHA, Vered, 6969000 Tel Aviv (IL); RIVLIN, Ze'ev, Raanana 4339307 Tel Aviv (IL); GABEL, Douglas, Hillsboro, OR Oregon 97124 (US); DOWNING, Sylvia, El Dorado Hills, CA California 95762 (US); BISWAL, Narayan, Folsom, CA California 95630 (US); RAVINDRAN, Binuraj, San Jose, CA California 95129 (US)
(74) Representative: HGF

(56) References cited:
- US-A1- 2016 241 818
- US-A1- 2017 064 262
- JOSE PORTELO ET AL: "Non-speech audio event detection", ACOUSTICS, SPEECH AND SIGNAL PROCESSING, 2009. ICASSP 2009. IEEE INTERNATIONAL CONFERENCE ON, 24 April 2009 (2009-04-24), pages 1973-1976, XP055563297, Piscataway, NJ, USA DOI: 10.1109/ICASSP.2009.4959998 ISBN: 978-1-4244-2353-8

## Description

### TECHNICAL FIELD

Embodiments generally relate to audio signal processing. More particularly, embodiments relate to audio events triggering video analytics.

### BACKGROUND

Current methods used for security analytics are constrained in terms of energy efficiency, connectivity, occlusion and privacy. Capturing, processing, and sending video streams to the cloud requires a great deal of energy. In addition, if a house is instrumented with many cameras, the computational and power cost for transmitting all the video streams continuously may be prohibitive for the consumer.

It is more desirable to process data locally rather than send video streams to the cloud. For security cameras that send data to the cloud, it is often desirable not to transmit videos of normal household activity. Moreover, cameras are not advisable in sensitive areas like bathrooms, locker rooms, bedrooms, etc. Also, camera-only security solutions are limited based on the placement of the camera, lighting conditions and other obstructions.

US2017064262A1 relates to automatically triggering video surveillance using embedded voice, speech, or sound recognition.

US2016241818A1 relates to receiving sound from an area being monitored by a video surveillance system having a camera and microphone, analyzing the sound to determine a classification of the sound, and capturing video of the area being monitored responsive to the classification of the sound.

J. Portelo, M. Bugalho, I. Trancoso, J. Neto, A. Abad and A. Serralheiro, "Non-speech audio event detection," 2009 IEEE International Conference on Acoustics, Speech and Signal Processing, Taipei, 2009, pp. 1973-1976 relates to the detection of non-speech events, and as such only searches for events in audio segments that have been previously classified as non-speech.

### SUMMARY OF INVENTION

The scope of protection includes security systems according to claims 1,2, methods accordingly to claims 6,7 and a computer readable medium according to claim 12.

### BRIEF DESCRIPTION OF THE DRAWINGS

The various advantages of the embodiments will become apparent to one skilled in the art by reading the following specification and appended claims, and by referencing the following drawings, in which:
FIG. 1 is a diagram illustrating an example security system incorporating audio events to trigger video analytics for surveillance according to an embodiment;
FIG. 2 is a block diagram illustrating an example audio processing pipeline for deciding when to turn on the video for surveillance in a security system according to an embodiment;
FIG. 3 is a flow diagram of an example method of an audio process to determine when to turn on video based on audio analysis according to an embodiment;
FIG. 4 is a block diagram of an example of a security system according to an embodiment;
FIG. 5 is an illustration of an example of a semiconductor package apparatus according to an embodiment;
FIG. 6 is a block diagram of an exemplary processor according to an embodiment; and
FIG. 7 is a block diagram of an exemplary computing system according to an embodiment.

In the following detailed description, reference is made to the accompanying drawings which form a part hereof wherein like numerals designate like parts throughout, and in which is shown by way of illustration embodiments that may be practiced. It is to be understood that other embodiments may be utilized and structural or logical changes may be made without departing from the scope of the present disclosure. Therefore, the following detailed description is not to be taken in a limiting sense, and the scope of protection is defined by the appended claims.

### DESCRIPTION OF EMBODIMENTS

Embodiments relate to technology that enhances the functionality of video security camera analytics by incorporating audio processing to trigger when to turn on video. A security system includes a plurality of microphones interspersed throughout a surveillance area to extend the surveillance range to additional areas and to enable audio analytics to enhance surveillance insights in certain areas where placing a camera is neither desirable nor possible due to privacy or other considerations. The security system includes an audio classifier that is trained to detect interesting sounds (i.e., alarming sounds) as well as uninteresting sounds (i.e., unalarming sounds). The system also includes an automatic speaker recognition engine that is trained on the voices of registered users to detect when they are present. The decision to turn on the video depends on speaker recognition and audio classification results. In addition, other contextual data may be incorporated to help determine when to turn on the video. The other contextual data may include the location of the camera within the surveillance area, the time of day, user behavior patterns, and other sensor data that may exist within the system. Such sensor data may include, for example, a motion sensor, a proximity sensor, etc. The combination of the contextual data with the audio recognition capability may enable anomaly detection, such that when unusual patterns are heard in a location and time of day that is out of the ordinary, the video modality may be put on alert.

When an interesting sound is detected and the system does not detect any voices of any registered users, the video may be turned on. When an interesting sound is detected in a location in which the system only detects voices of the registered users in a manner that depicts a typical user behavior pattern for that time of day, the video may not be turned on. But, when an interesting sound is detected in a location and at a time of day that is an anomaly, the video modality may be put on alert to enable quick turn on if necessary. If there are no interesting sounds detected, the video remains off to ensure user privacy.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. Additionally, it should be appreciated that items included in a list in the form of "at least one of A, B, and C" can mean (A); (B); (C); (A and B); (B and C); (A and C); or (A, B, and C). Similarly, items listed in the form of "at least one of A, B, or C" can mean (A); (B); (C); (A and B); (B and C); (A and C); or (A, B, and C).

The disclosed embodiments may be implemented, in some cases, in hardware, firmware, software, or any combination thereof. The disclosed embodiments may also be implemented as instructions carried by or stored on one or more transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device). As used herein, the term "logic" and "module" may refer to, be part of, or include an application specific integrated circuit (ASIC), an electronic circuit, a processor (shared, dedicated, or group), and/or memory (shared, dedicated, or group) that execute one or more software or firmware programs having machine instructions (generated from an assembler and/or a compiler), a combinational logic circuit, and/or other suitable components that provide the described functionality.

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, it may not be included or may be combined with other features.

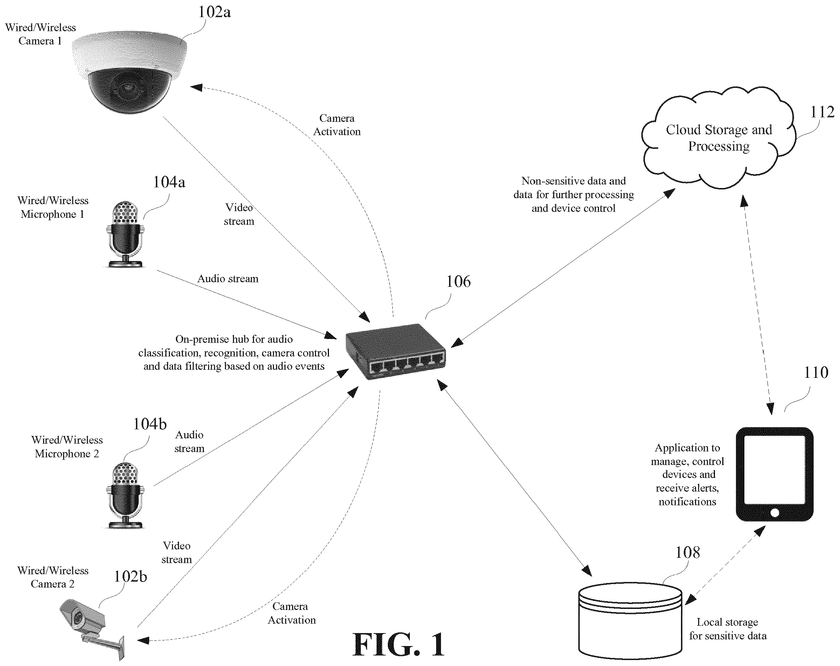

FIG. 1 is a diagram illustrating an example security system 100 incorporating audio events to trigger video analytics for surveillance according to an embodiment. The security system 100 comprises two cameras 102a and 102b, two microphones 104a and 104b, an on-premise processing module/hub 106, local storage 108, a companion device 110 and cloud processing module and storage 112. Although the system 100 only shows two cameras 102a and 102b and two microphones 104a and 104b, embodiments are not limited to two cameras and two microphones. In fact, embodiments may have more than two cameras or less than two cameras (i.e., one camera) and more than two microphones or less than two microphones (i.e., one microphone). The microphones 104a and 104b may be wired or wireless. In embodiments, the microphones may be located in areas where a camera may be prohibited (due to privacy or other considerations) to extend the surveillance range to additional areas. In other embodiments, cameras and microphones may be co-located. In yet other embodiments, there may be a combination of microphones remotely located from cameras as well as microphones co-located with cameras. Cameras 102a and 102b may also be wired or wireless. The cameras 102a and 102b are coupled to the on-premise processing module/hub 106 via a wired or wireless connection. The microphones 104a and 104b are coupled to the on-premise processing module/hub 106 via wired or wireless connection. The on-premise processing module/hub 106 is coupled to the local storage 108. The on-premise processing module/hub 106 may include a network interface card (NIC) to enable wireless communication with the cloud processing and storage module 112. The companion device 110 may be a computing device, such as, for example, a mobile phone, a tablet, a wearable device, a laptop computer or any other computing device capable of controlling the on-premise processing module/hub 106 and the cloud processing module and storage 112. An application running on the companion device 110 allows the companion device 110 to configure and control both the on-premise processing module/hub 106 and the cloud processing module and storage 112.

Security system 100 may be placed in the homes, office buildings, parking lots, and other locations in which surveillance is needed. Embodiments of security system 100 use audio analytics as an additional modality to improve false accept and false reject rates and cut down on the amount of computation required with camera only solutions by turning the video on only when an interesting sound occurs. The system is pretrained to detect interesting sounds, such as, for example, dogs barking, glass breaking, gun shots, screaming, etc. and uninteresting sounds, such as, for example, leaves blown by the wind, typical household sounds (vacuum cleaner, washing machine, dryer, dishwasher), etc.

A huge concern for consumers is privacy. For home installations in particular, households do not want to transmit videos of normal household activities to the cloud. Security system 100 applies speaker recognition techniques to the audio streams having speech to detect when users of the system are present. If a user of the system is present when a sound of interest occurs and the system 100 has prior knowledge of household patterns, the video may be kept off if nothing else out of the ordinary is occurring to preserve the privacy of the user.

Audio streams coming from the microphones 104a and 104b to the on-premise processing module/hub 106 are processed and analyzed to determine if an audio event of interest has been detected, if any speech has been detected, and if speech is detected, can the speech be identified as coming from one of the registered users. Based on the type of audio event and the speaker identification, along with other parameters, such as, for example, the location of the camera, the time of day, user behavior patterns, and other types of sensors (motion, proximity, etc.) that may be included in the system (but not shown in FIG. 1), the on-premise processing module/hub 106 may determine whether the video camera should be activated. If the camera 102a and/or 102b is activated, the video stream(s) received from the camera 102a and/or 102b may be filtered based on context information received from the audio streams (glass breaking, car alarm, conversation between users in the home, etc.) to decide whether the video streams need to be saved locally in local storage 108 to keep the private videos on-premises or may be sent to the cloud for storage.

The on-premises processing module 106 and the cloud processing module and storage 112 can be configured and controlled using an application running on the companion device 110. In addition, the on-premises processing module 106 and the cloud processing and storage module 112 may send notifications and alerts to the companion device 110 when user attention is necessary.

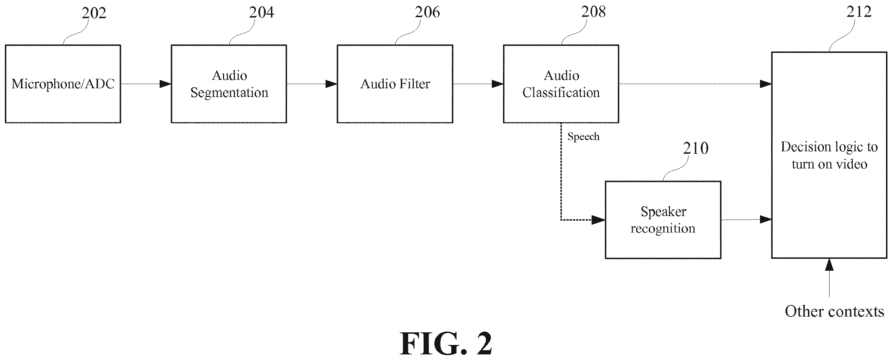

FIG. 2 is a block diagram 200 illustrating an audio processing pipeline for deciding when to turn on the video for surveillance in a security system according to an embodiment. Block diagram 200 includes a microphone 202, an audio segmentation 204, an audio filter 206, an audio classifier 208, a speaker recognition engine 210 and decision logic 212. The microphone 202 is coupled to the audio segmentation 204. The audio segmentation 204 is coupled to the audio filter 206. The audio filter 206 is coupled to the audio classifier 208. The audio classifier 208 is coupled to the speaker recognition engine 210 and the decision logic 212. The speaker recognition engine 210 is coupled to the decision logic 212.

The microphone 202 receives audio input in the form of an audio stream. If the microphone 202 is an analog microphone, the microphone 202 will include an analog to digital converter (ADC) to convert the analog audio stream to a digital audio stream. In an embodiment where the microphone 202 is a digital microphone, an ADC is not needed.

The audio segmentation 204 receives the digitized audio stream and divides the audio stream into short audio segments, i.e., audio blocks, approximately matching the time resolution necessary for the decision logic 212. In one embodiment, the audio segments may be 0.25 to several seconds in length.

The audio filter 206 may be used to filter high energy audio segments for processing. The low energy audio segments (i.e., background noise) are ignored. In an embodiment, the standard deviation of the audio received by the system is continuously taken and a baseline is determined as to what may be considered background noise (i.e., ambient background noise). When the system receives an audio segment that is significantly greater than the ambient background noise, the audio segment is identified as a high energy audio segment.

The audio classifier 208 may be used to classify the high energy audio segments. The high energy audio segments may be classified as speech, an alarming sound, or a non-alarming sound. The audio classifier 208 may be trained to recognize speech, alarming sounds, and non-alarming sounds prior to installation of the security system. Training may continue after installation to enable the system to adapt to the surroundings in which it is installed as well as learn other interesting sounds that may be of importance to the users of the system. In one embodiment, the audio classifier 208 may be trained at the factory. Alarming sounds may include, for example, dog barking, glass breaking, baby crying, person falling, person screaming, car alarms, loud car crashes, gun shots, or any other sounds that may cause one to be alarmed, frightened or terrified. Non-alarming sounds may include, for example, leaves blowing in the wind, vacuum cleaner running, dishwasher/washing machine/dryer running, and other typical noises critical to one's environment that would not cause one to be alarmed.

The audio classifier 208 extracts spectral features, such as, for example, Mel Frequency Cepstral Coefficients (MFCC), Perceptual Linear Prediction (PLP), etc. of the high energy audio segments that represent an alarming or an unalarming sound. The features may be computed in predetermined time frames and then concatenated with a longer context, such as, for example, +/- 15 frames, to form a richer feature that captures temporal variations. In embodiments, the predetermined time frames may be 10 ms, 20 ms, 30 ms, or 40 ms. These features are then fed into a classifier, such as, for example, Gaussian Mixture Model (GMM), Support Vector Machine (SVM), a Deep Neural Network (DNN), a Convolutional Neural Network (CNN), a Recurrent Neural Network (RNN), etc. For deep learning classifiers such as DNN, CNN, or RNN, it is possible to use raw samples as inputs rather than spectral features. The output from the deep learning classifier may predict which one of the N possible classes (i.e., the alarming sounds) the network was trained to recognize for the input audio. If one of the alarming sounds is chosen, this information is used by the decision logic 212 to determine whether to turn on one or more video cameras.

The speaker recognition engine 210 may be used to determine if the high energy audio segments identified by the audio classifier 208 as speech belong to any of the registered users of the system. The system, in order to work efficiently, must be able to recognize the voices of the registered users of the system. Registered users of the system may enroll their voices into the speaker recognition engine 210 to enable the system to develop speaker models for each user using machine learning techniques. This allows the speaker recognition engine 210 to recognize a registered user's voice when received via any one of the microphones of the security system. In one embodiment, video may be used by the system to aid in learning a registered user's voice. When a registered user is speaking and their lips are moving (captured by video), the audio is captured to enroll the person's voice. In another embodiment, the registered users may engage in an enrollment process where they are asked to read several phrases and passages while their voice is being recorded.

The speaker recognition engine 210 may extract spectral features, similar to those extracted by the audio classification 208, such as, for example, MFCC, PLP, etc., every 10 ms frames of an utterance. In other embodiments, the spectral features may be extracted at time frames other than every 10 ms. The frames are then fed into backend classifiers, such as, for example, Gaussian Mixture Models-Universal Background Model (GMM-UBM), Gaussian Mixture Models-Support Vector Machine (GMM-SVM), a deep neural network or i-vector Probabilistic Linear Discriminant Analysis (PLDA). For deep neural network classifiers, it is possible to feed raw samples as input rather than spectral features. The output of the backend classifier is a speaker score. A high score may indicate a close match to a speaker model of a registered user. If the speaker recognition engine 210 recognizes the speech as one of the registered users, then privacy issues come into play when deciding whether to turn one or more video cameras on and whether to process the video locally or in the cloud.

The decision to turn on a video camera depends on the results of the audio classification 208 and the speaker recognition engine 210. In addition, other contexts are incorporated, such as, for example, the location of the camera within a surveillance area in which the audio was heard, the time of day, user behavior patterns, proximity sensor data, motion sensor data, etc. The decision logic 212 takes the audio classification 208 output, the speaker recognition engine 210 output and the context data input, and determines whether to turn one or more video cameras on, to leave the cameras off, or to put one or more video cameras on alert.

The decision logic 212 may be based on a set of rules, which can be adjusted by the registered users. The rule set may be based on a combination of the audio classification, speech recognition, and contextual data. Alternatively, to make the system user-friendly, it can incorporate a machine learning (ML) algorithm trained by decision preferences labeled by a large set of potential users. The ML algorithm can take as input the audio analysis from the audio classification 208, the speaker recognition engine 210 and the other contexts to generate a yes/no decision. Such algorithms may include, but are not limited to, decision tree, random forest, support vector machine (SVM), logistic regression, and a plurality of neural networks. A pre-trained generic model could incorporate the preferences of many users (for example, from the large set of potential users) intended to work well for most people out of the box. The generic model may be improved over time as it receives input from the registered users and learns the behavior patterns of the registered users.

A combination of the other contexts with the audio recognition capability (i.e., audio classification 208 and speaker recognition engine 210) can not only determine whether to turn on one or more video cameras in the system, but can also enable anomaly detection such that when unusual patterns are heard in a location and at a time of day that is suspicious, the video modality may be put on alert. In embodiments where the security system is a home security system and the camera in question is located inside the house, the decision to turn on the video camera must take into consideration whether or not speech of a household member has been heard, and if so, should the video remain off. In one embodiment, the video may remain off if the user behavior patterns dictate normal behavior and the alarming sound is not an extreme alarm, such as, for example, a dog barking with sounds of human laughter. But in the case where the alarming sound is an extreme alarm, such as, for example, a gun shot, all of the video cameras in the system may be turned on at that time.

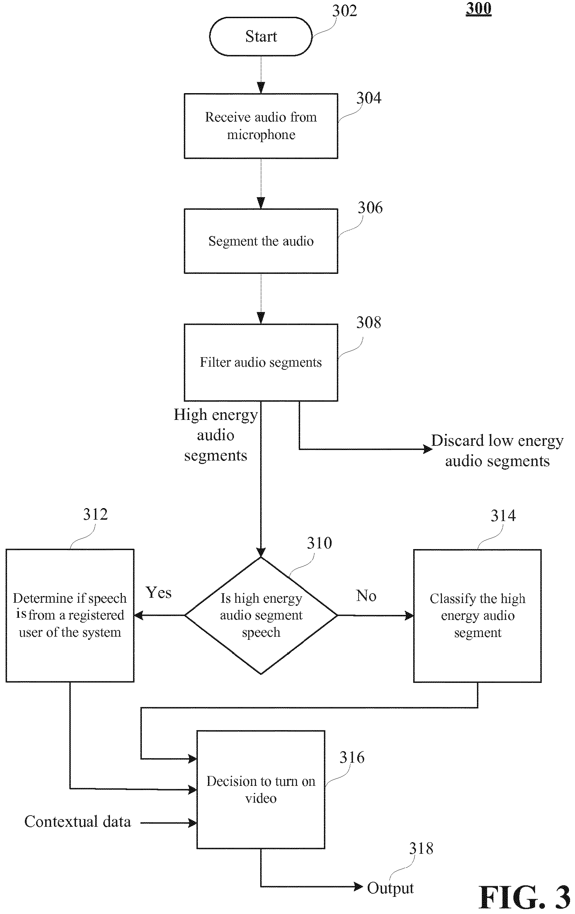

FIG. 3 is a flow diagram of an example method of an audio process to determine when to turn on video based on audio analysis according to an embodiment. The method 300 may generally be implemented in a system such as, for example, the example security system 100 as shown in FIG. 1, having an audio pipeline as described in FIG. 2. More particularly, the method 300 may be implemented in one or more modules as a set of logic instructions stored in a machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), and fixed-functionality logic hardware using circuit technology such as, for example, application specific integrated circuit (ASIC), complementary metal oxide semiconductor (CMOS) or transistor-transistor logic (TTL) technology, or any combination thereof.

For example, computer program code to carry out operations shown in the method 400 may be written in any combination of one or more programming languages, including an object-oriented programming language such as JAVA, SMALLTALK, C++ or the like and conventional procedural programming languages, such as the "C" programming language or similar programming languages. Additionally, logic instructions might include assembler instruction, instruction set architecture (ISA) instructions, machine instruction, machine depended instruction, microcode, state setting data, configuration data for integrated circuitry, state information that personalizes electronic circuitry and/or other structural components that are native to hardware (e.g., host processor, central processing unit (CPU), microcontroller, digital signal processor (DSP), etc.).

The process begins in block 302, where the process proceeds to block 304. In block 304, a microphone receives an audio stream. If the microphone is an analog microphone, the microphone may include an ADC to convert the analog audio stream to a digital audio stream. If the microphone is a digital microphone, then the ADC is not required. The process then proceeds to block 306.

In block 306, the digital audio stream is divided into short audio segments, i.e., audio blocks, approximately matching the time resolution of the decision logic used to determine whether or not to turn on the video. In one embodiment, the audio segments may be 0.25 to several seconds in length. The process then proceeds to block 308.

In block 308, the audio segments are filtered to obtain high energy audio segments for further processing. In one embodiment, the remaining low energy audio segments (i.e., background noise) are ignored. In another embodiment, the remaining low energy audio segments are discarded.

In an embodiment, the standard deviation of the audio signals received by the system is continuously measured. Based on the standard deviation, a baseline is determined as to what may be considered ambient background noise. When the system receives an audio segment that is significantly greater than the ambient background noise, the audio segment is identified as a high energy audio segment. The process then proceeds to decision block 310.

In decision block 310, it is determined whether a first high energy audio segment is speech. If the first high energy audio segment is speech, the process proceeds to block 312.

In block 312, it is determined whether the speech is from a registered user of the security system. If the speech is from a registered user, the privacy of the registered user is taken into consideration when deciding whether to turn on the video. In this instance, an indication that the speech is from a registered user is sent to block 316. If the speech is not from a registered user, an indication that the speech does not come from a registered user is sent to block 316.

Returning to decision block 310, if a second high energy audio segment is not speech, the process proceeds to block 314. In block 314, classification of the high energy audio segment is performed. Classification of the second high energy audio segment as one of the sounds of interest to the security system may require the video to be turned on for surveillance. Sounds of interest refer to alarming sounds such as, but are not limited to, dog barking, glass breaking, baby crying, person falling, person screaming, car alarms, loud car crashes, gun shots, and/or any other sounds that may cause one to be alarmed, frightened or terrified. The classification of the high energy audio segment is sent to block 316.

In block 316, a determination is made whether to keep the video off or turn the video on based on audio classification results from block 314, speaker recognition results from block 312, and contextual data input to block 316. This may include turning on more than one camera at the same time based on the severity of the classification of the high energy audio segment as an alarm.

In an embodiment, if the audio classification of the second high energy audio segment is not an alarming sound, the video may remain off or be turned off. If the audio classification of the second high energy audio segment is an alarming sound and there is no speaker recognition of a user of the security system in the first high energy audio segment, then the video may be turned on. Because there is no speaker recognition of a user and, therefore, no privacy issues, the video may be processed in the cloud or locally at the discretion of the owner.

If the audio classification of the second high energy audio segment is an alarming sound and there is speaker recognition of a user in the first high energy audio segment, then whether to turn the video on or allow the video to remain off is more of a grey area and may be based on contextual data. For example, if the security system is a home security system and the location of one or more cameras is inside the home, the decision to turn on the video should be tilted more toward privacy, such that when speech of household members is identified repeatedly and the user behavior patterns are normal, the video may remain off. For example, if the system detects a dog barking or glass breaking and it is around the normal time in which a family is having dinner, and speaker recognition includes family members having a normal conversation over dinner, the system may prevent the video from being turned on in the kitchen during dinner time. In another example, if the system detects the dog barking and glass breaking, and the glass break sounds more like the kitchen window being shattered than a drinking glass breaking (which may be indicative of a break-in), and the speaker recognition includes family member voices in a panic rather than having a normal conversation over dinner, the system may turn on the video in the kitchen, and may also turn on all the video cameras in the house to determine if a break-in is occurring in other rooms of the home. In this instance, the video data can either be processed locally or sent to the cloud. To protect the privacy of the family members in the video, the video data may be processed locally instead of being sent to the cloud.

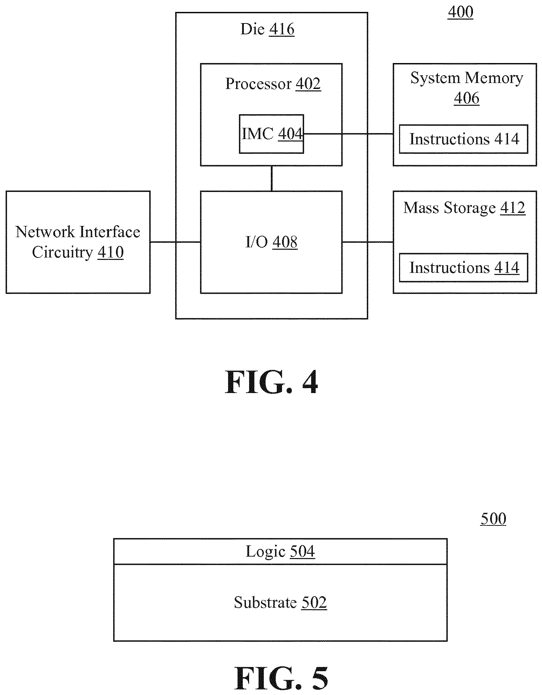

FIG. 4 shows a system 400 that may be readily substituted for the security system shown above with reference to FIG. 1. The illustrated system 400 includes a processor 402 (e.g., host processor, central processing unit/CPU) having an integrated memory controller (IMC) 404 coupled to a system memory 406 (e.g., volatile memory, dynamic random access memory/DRAM). The processor 402 may also be coupled to an input/output (I/O) module 408 that communicates with network interface circuitry 410 (e.g., network controller, network interface card/NIC) and mass storage 612 (non-volatile memory/NVM, hard disk drive/HDD, optical disk, solid state disk/SSD, flash memory). The network interface circuitry 410 may receive audio input streams from at least one microphone such as, for example, audio streams from microphone 104a and/or 104b (shown in FIG. 1), wherein the system memory 406 and/or the mass storage 412 may be memory devices that store instructions 414, which when executed by the processor 402, cause the system 400 to perform one or more aspects of the method 300 (FIG. 3), already discussed. Thus, execution of the instructions 414 may cause the system 400 to divide the audio input stream into audio segments, filter high energy audio segments from the audio segments, if a first high energy audio segment includes speech, determine if the speech is recognized as a user of the security system, if a second high energy audio segment does not include speech, classify the second high energy audio segment as an interesting sound or an uninteresting sound, and determine whether to turn video on based on classification of the second high energy audio segment as an interesting sound, speech recognition of a user, and contextual data. The processor 402 and the IO module 408 may be incorporated into a shared die 416 as a system on chip (SoC).

FIG. 5 shows a semiconductor package apparatus 500 (e.g., chip) that includes one or more substrates 502 (e.g., silicon, sapphire, gallium arsenide) and logic 504 (e.g., transistor array and other integrated circuit/IC components) coupled to the one or more substrates 502. The logic 504, which may be implemented in configurable logic and/or fixed-functionality logic hardware, may generally implement one or more aspects of the method 300 (FIG. 3), already discussed.

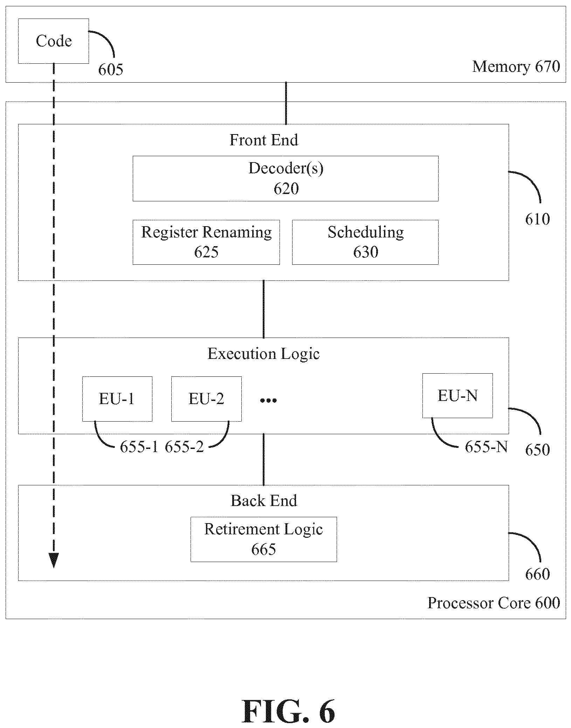

FIG. 6 illustrates a processor core 600 according to one embodiment. The processor core 600 may be the core for any type of processor, such as a micro-processor, an embedded processor, a digital signal processor (DSP), a network processor, or other device to execute code. Although only one processor core 600 is illustrated in FIG. 6, a processing element may alternatively include more than one of the processor core 600 illustrated in FIG. 6. The processor core 600 may be a single-threaded core or, for at least one embodiment, the processor core 600 may be multithreaded in that it may include more than one hardware thread context (or "logical processor") per core.

FIG. 6 also illustrates a memory 670 coupled to the processor core 600. The memory 670 may be any of a wide variety of memories (including various layers of memory hierarchy) as are known or otherwise available to those of skill in the art. The memory 670 may include one or more code 605 instruction(s) to be executed by the processor core 600, wherein the code 605 may implement the method 300 (FIG. 3), already discussed. The processor core 600 follows a program sequence of instructions indicated by the code 605. Each instruction may enter a front end portion 610 and be processed by one or more decoders 620. The decoder 620 may generate as its output a micro operation such as a fixed width micro operation in a predefined format, or may generate other instructions, microinstructions, or control signals which reflect the original code instruction. The illustrated front end portion 610 also includes register renaming logic 625 and scheduling logic 630, which generally allocate resources and queue the operation corresponding to the convert instruction for execution.

The processor core 600 is shown including execution logic 650 having a set of execution units 655-1 through 655-N. Some embodiments may include a number of execution units dedicated to specific functions or sets of functions. Other embodiments may include only one execution unit or one execution unit that can perform a particular function. The illustrated execution logic 650 performs the operations specified by code instructions.

After completion of execution of the operations specified by the code instructions, back end logic 660 retires the instructions of the code 605. In one embodiment, the processor core 600 allows out of order execution but requires in order retirement of instructions. Retirement logic 665 may take a variety of forms as known to those of skill in the art (e.g., re-order buffers or the like). In this manner, the processor core 600 is transformed during execution of the code 605, at least in terms of the output generated by the decoder, the hardware registers and tables utilized by the register renaming logic 625, and any registers (not shown) modified by the execution logic 650.

Although not illustrated in FIG. 6, a processing element may include other elements on chip with the processor core 600. For example, a processing element may include memory control logic along with the processor core 600. The processing element may include I/O control logic and/or may include I/O control logic integrated with memory control logic. The processing element may also include one or more caches.

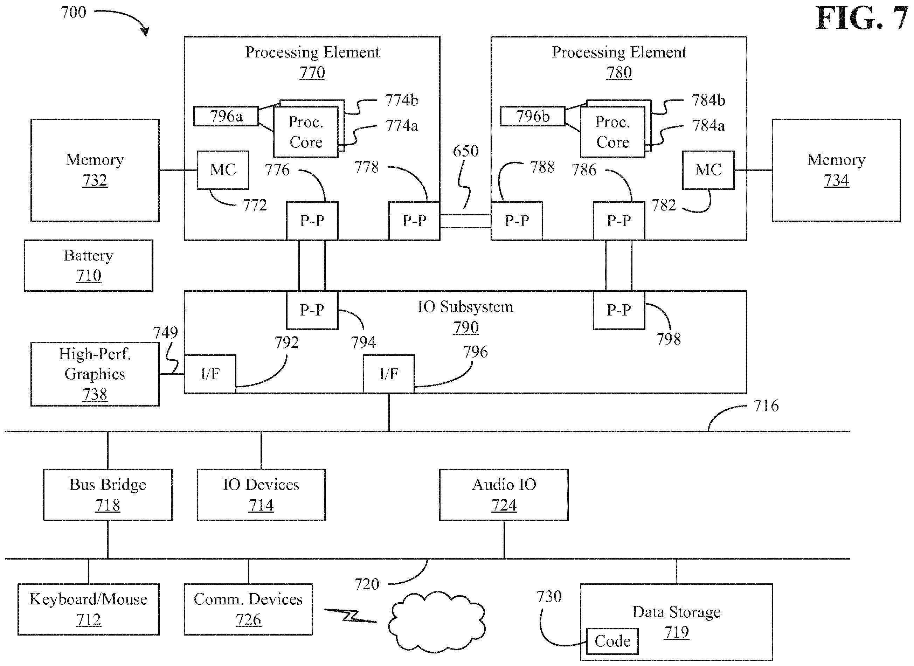

Referring now to FIG. 7, shown is a block diagram of a computing system 700 in accordance with an embodiment. Shown in FIG. 7 is a multiprocessor system 700 that includes a first processing element 770 and a second processing element 780. While two processing elements 770 and 780 are shown, it is to be understood that an embodiment of the system 700 may also include only one such processing element.

The system 700 is illustrated as a point-to-point interconnect system, wherein the first processing element 770 and the second processing element 780 are coupled via a point-to-point interconnect 750. It should be understood that any or all of the interconnects illustrated in FIG. 7 may be implemented as a multi-drop bus rather than point-to-point interconnect.

As shown in FIG. 7, each of processing elements 770 and 780 may be multicore processors, including first and second processor cores (i.e., processor cores 774a and 774b and processor cores 784a and 784b). Such cores 774a, 774b, 784a, 784b may be configured to execute instruction code in a manner similar to that discussed above in connection with FIG. 6.

Each processing element 770, 780 may include at least one shared cache 796a, 796b. The shared cache 796a, 796b may store data (e.g., instructions) that are utilized by one or more components of the processor, such as the cores 774a, 774b and 784a, 784b, respectively. For example, the shared cache 796a, 796b may locally cache data stored in a memory 732, 734 for faster access by components of the processor. In one or more embodiments, the shared cache 796a, 796b may include one or more mid-level caches, such as level 2 (L2), level 3 (L3), level 4 (L4), or other levels of cache, a last level cache (LLC), and/or combinations thereof.

While shown with only two processing elements 770, 780, it is to be understood that the scope of the embodiments are not so limited. In other embodiments, one or more additional processing elements may be present in a given processor. Alternatively, one or more of processing elements 770, 780 may be an element other than a processor, such as an accelerator or a field programmable gate array. For example, additional processing element(s) may include additional processors(s) that are the same as a first processor 770, additional processor(s) that are heterogeneous or asymmetric to processor a first processor 770, accelerators (such as, e.g., graphics accelerators or digital signal processing (DSP) units), field programmable gate arrays, or any other processing element. There can be a variety of differences between the processing elements 770, 780 in terms of a spectrum of metrics of merit including architectural, micro architectural, thermal, power consumption characteristics, and the like. These differences may effectively manifest themselves as asymmetry and heterogeneity amongst the processing elements 770, 780. For at least one embodiment, the various processing elements 770, 780 may reside in the same die package.

The first processing element 770 may further include memory controller logic (MC) 772 and point-to-point (P-P) interfaces 776 and 778. Similarly, the second processing element 780 may include a MC 782 and P-P interfaces 786 and 788. As shown in FIG. 7, MC's 772 and 782 couple the processors to respective memories, namely a memory 732 and a memory 734, which may be portions of main memory locally attached to the respective processors. While the MC 772 and 782 is illustrated as integrated into the processing elements 770, 780, for alternative embodiments the MC logic may be discrete logic outside the processing elements 770, 780 rather than integrated therein.

The first processing element 770 and the second processing element 780 may be coupled to an I/O subsystem 790 via P-P interconnects 776 786, respectively. As shown in FIG. 7, the I/O subsystem 790 includes P-P interfaces 794 and 798. Furthermore, I/O subsystem 790 includes an interface 792 to couple I/O subsystem 790 with a high performance graphics engine 738. In one embodiment, bus 749 may be used to couple the graphics engine 738 to the I/O subsystem 790. Alternately, a point-to-point interconnect may couple these components.

In turn, I/O subsystem 790 may be coupled to a first bus 716 via an interface 796. In one embodiment, the first bus 716 may be a Peripheral Component Interconnect (PCI) bus, or a bus such as a PCI Express bus or another third generation I/O interconnect bus, although the scope of the embodiments are not so limited.

As shown in FIG. 7, various I/O devices 714 (e.g., biometric scanners, speakers, cameras, sensors) may be coupled to the first bus 716, along with a bus bridge 718 which may couple the first bus 716 to a second bus 720. In one embodiment, the second bus 720 may be a low pin count (LPC) bus. Various devices may be coupled to the second bus 720 including, for example, a keyboard/mouse 712, communication device(s) 726, and a data storage unit 719 such as a disk drive or other mass storage device which may include code 730, in one embodiment. The illustrated code 730 may implement the method 300 (FIG. 3), already discussed, and may be similar to the code 605 (FIG. 6), already discussed. Further, an audio I/O 724 may be coupled to second bus 720 and a battery 710 may supply power to the computing system 700.

Note that other embodiments are contemplated. For example, instead of the point-to-point architecture of FIG. 7, a system may implement a multi-drop bus or another such communication topology. Also, the elements of FIG. 7 may alternatively be partitioned using more or fewer integrated chips than shown in FIG. 7.

Embodiments are applicable for use with all types of semiconductor integrated circuit ("IC") chips. Examples of these IC chips include but are not limited to processors, controllers, chipset components, programmable logic arrays (PLAs), memory chips, network chips, systems on chip (SoCs), SSD/NAND controller ASICs, and the like. In addition, in some of the drawings, signal conductor lines are represented with lines. Some may be different, to indicate more constituent signal paths, have a number label, to indicate a number of constituent signal paths, and/or have arrows at one or more ends, to indicate primary information flow direction. This, however, should not be construed in a limiting manner. Rather, such added detail may be used in connection with one or more exemplary embodiments to facilitate easier understanding of a circuit. Any represented signal lines, whether or not having additional information, may actually comprise one or more signals that may travel in multiple directions and may be implemented with any suitable type of signal scheme, e.g., digital or analog lines implemented with differential pairs, optical fiber lines, and/or single-ended lines.

Example sizes/models/values/ranges may have been given, although embodiments are not limited to the same. As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the embodiments. Further, arrangements may be shown in block diagram form in order to avoid obscuring embodiments, and also in view of the fact that specifics with respect to implementation of such block diagram arrangements are highly dependent upon the computing system within which the embodiment is to be implemented, i.e., such specifics should be well within purview of one skilled in the art. Where specific details (e.g., circuits) are set forth in order to describe example embodiments, it should be apparent to one skilled in the art that embodiments can be practiced without, or with variation of, these specific details. The description is thus to be regarded as illustrative instead of limiting.

The term "coupled" may be used herein to refer to any type of relationship, direct or indirect, between the components in question, and may apply to electrical, mechanical, fluid, optical, electromagnetic, electromechanical or other connections. In addition, the terms "first", "second", etc. may be used herein only to facilitate discussion, and carry no particular temporal or chronological significance unless otherwise indicated.

As used in this application and in the claims, a list of items joined by the term "one or more of' may mean any combination of the listed terms. For example, the phrases "one or more of A, B or C" may mean A; B; C; A and B; A and C; B and C; or A, B and C.

Those skilled in the art will appreciate from the foregoing description that the broad techniques of the embodiments can be implemented in a variety of forms. Therefore, while the embodiments have been described in connection with particular examples thereof, the scope of protection is only defined by the appended claims.

## Claims

1. A security system (100) having audio analytics comprising:
network interface circuitry to receive an audio input stream via a microphone (104a, 104b);
a processor coupled to the network interface circuitry;
one or more memory devices coupled to the processor, the one or more memory devices including instructions, which when executed by the processor cause the system (100) to:
divide the audio input stream into audio segments;
filter high energy audio segments from the audio segments;
determine that a first high energy audio segment includes speech, and determine if the speech is recognized as the speech of users of the system;
determine that a second high energy audio segment does not include the speech, and
classify the second high energy audio segment as an interesting sound or an uninteresting sound; and
determine whether to turn video on based on classification of the second high energy audio segment as the interesting sound, speech recognition of the speech as the speech of the users of the system, and contextual data, wherein
if the classification of the second high energy audio segment comprises the interesting sound, in the first high energy audio segment the speech is recognized as the speech of the users of the system (100), and the contextual data indicates a normal user behavior pattern, the instructions, which when executed by the processor further cause the system (100) to turn the video off or keep the video off to maintain privacy of the user.

2. A security system (100) having audio analytics comprising:
network interface circuitry to receive an audio input stream via a microphone (104a, 104b);
a processor coupled to the network interface circuitry;
one or more memory devices coupled to the processor, the one or more memory devices including instructions, which when executed by the processor cause the system (100) to:
divide the audio input stream into audio segments;
filter high energy audio segments from the audio segments;
determine that a first high energy audio segment includes speech, and determine if the speech is recognized as the speech of users of the system;
determine that a second high energy audio segment does not include the speech, and classify second the high energy audio segment as an interesting sound or an uninteresting sound; and
determine whether to turn video on based on classification of the second high energy audio segment as the interesting sound, speech recognition of the speech as the speech of the users of the system, and contextual data, wherein
if the classification of the second high energy audio segment comprises the interesting sound, in the first high energy audio segment the speech is recognized as the speech of the users of the system (100), and the contextual data indicates an abnormal user behavior pattern, the instructions, which when executed by the processor further cause the system (100) to turn the video on.

3. The security system (100) of claim 1 or claim 2, wherein an interesting sound includes one or more of a dog barking, glass breaking, baby crying, person falling, person screaming, car alarm sounding, loud car crash or gun shot.

4. The security system (100) of claim 1 or claim 2, wherein if the classification of the second high energy audio segment comprises the interesting sound and in the first high energy audio segment the speech is not recognized as the speech of the users of the system (100), the instructions, which when executed by the processor further cause the system (100) to turn the video on.

5. The security system (100) of claim 1 or claim 2, wherein if the classification of the second high energy audio segment comprises the uninteresting sound, the instructions, which when executed by the processor further cause the system (100) to turn the video off or keep the video off.

6. A method for using an audio trigger for surveillance in a security system comprising:
receiving an audio input stream via a microphone (104a, 104b);
dividing the audio input stream into audio segments;
filtering high energy audio segments from the audio segments;
determining that a first high energy audio segment includes speech, and determining if the speech is recognized as the speech of users of the system (100);
determining that a second high energy audio segment does not include the speech, and
classifying the second high energy audio segment as an interesting sound or an uninteresting sound; and
determining whether to turn video on based on classification of the second high energy audio segment as the interesting sound, speech recognition of the speech as the speech of the users of the system (100), and contextual data, wherein
if the classification of the second high energy audio segment comprises the interesting sound, in the first high energy audio segment the speech is recognized as the speech of the users of the system (100), and the contextual data indicates a normal user behavior pattern, the method further comprising turning the video off or keeping the video off to maintain privacy of the user.

7. A method for using an audio trigger for surveillance in a security system comprising:
receiving an audio input stream via a microphone (104a, 104b);
dividing the audio input stream into audio segments;
filtering high energy audio segments from the audio segments;
determining that a first high energy audio segment includes speech, and determining if the speech is recognized as the speech of users of the system (100);
determining that a second high energy audio segment does not include the speech, and classifying the second high energy audio segment as an interesting sound or an uninteresting sound; and
determining whether to turn video on based on classification of the second high energy audio segment as the interesting sound, speech recognition of the speech as the speech of the users of the system (100), and contextual data, wherein
if the classification of the second high energy audio segment comprises the interesting sound, in the first high energy audio segment the speech is recognized as the speech of the users of the system (100), and the contextual data indicates an abnormal user behavior pattern, the method further comprising putting video modality on alert.

8. The method of claim 6 or claim 7, wherein an interesting sound includes one or more of a dog barking, glass breaking, baby crying, person falling, person screaming, car alarm sounding, loud car crash, or gun shot.

9. The method of claim 6 or claim 7, wherein if the classification of the second high energy audio segment comprises the interesting sound and in the first high energy audio segment the speech is not recognized as the speech of the users of the system (100), the method further comprising turning the video on.

10. The method of claim 6 or claim 7, wherein if the classification of the second high energy audio segment comprises the uninteresting sound, the method further comprising turning the video off or keeping the video off.

11. The method of claim 6 or claim 7, wherein classifying the second high energy audio segment as an interesting sound or an uninteresting sound comprises:
extracting spectral features from the second high energy audio segment in predetermined time frames;
concatenating the predetermined time frames with a longer context of +/- 15 frames to form a richer feature that captures temporal variations; and
feeding the richer feature into a deep learning classifier to enable classification of the second high energy audio segment as one of the interesting sound or the uninteresting sound.

12. At least one computer readable medium comprising a set of instructions, which when executed by a computing system, cause the computing system to perform the method of any one of claims 6 to 11.

## Patentansprüche

1. Sicherheitssystem (100), das Audioanalytik aufweist, umfassend:
eine Netzwerkschnittstellenschaltungsanordnung zum Empfangen eines Audioeingabestreams über ein Mikrofon (104a, 104b);
einen Prozessor, gekoppelt mit der Netzwerkschnittstellenschaltungsanordnung;
eine oder mehrere Speichervorrichtungen, gekoppelt mit dem Prozessor, wobei die eine oder die mehreren Speichervorrichtungen Anweisungen beinhalten, die bei Ausführung durch den Prozessor das System (100) veranlassen zum:
Aufteilen des Audioeingabestreams in Audiosegmente;
Filtern von Hochenergie-Audiosegmenten aus den Audiosegmenten;
Bestimmen, dass ein erstes Hochenergie-Audiosegment Sprache beinhaltet, und Bestimmen, ob die Sprache als die Sprache von Benutzern des Systems erkannt wird;
Bestimmen, dass ein zweites Hochenergie-Audiosegment die Sprache nicht beinhaltet, und
Klassifizieren des zweiten Hochenergie-Audiosegments als ein interessantes Geräusch oder ein uninteressantes Geräusch; und
Bestimmen, ob Video eingeschaltet werden soll, auf der Grundlage der Klassifikation des zweiten Hochenergie-Audiosegments als das interessante Geräusch, von Spracherkennung der Sprache als die Sprache der Benutzer des Systems und von kontextuellen Daten, wobei,
falls die Klassifikation des zweiten Hochenergie-Audiosegments das interessante Geräusch umfasst, in dem ersten Hochenergie-Audiosegment die Sprache als die Sprache der Benutzer des Systems (100) erkannt wird und die kontextuellen Daten ein normales Benutzerverhaltensmuster angeben, die Anweisungen, die, wenn sie durch den Prozessor ausgeführt werden, das System (100) ferner zum Ausschalten des Videos oder zum Halten des Videos als ausgeschaltet veranlassen, um die Privatsphäre des Benutzers aufrechtzuerhalten.

2. Sicherheitssystem (100), das Audioanalytik aufweist, umfassend:
eine Netzwerkschnittstellenschaltungsanordnung zum Empfangen eines Audioeingabestreams über ein Mikrofon (104a, 104b);
einen Prozessor, gekoppelt mit der Netzwerkschnittstellenschaltungsanordnung;
eine oder mehrere Speichervorrichtungen, gekoppelt mit dem Prozessor, wobei die eine oder die mehreren Speichervorrichtungen Anweisungen beinhalten, die bei Ausführung durch den Prozessor das System (100) veranlassen zum:
Aufteilen des Audioeingabestreams in Audiosegmente;
Filtern von Hochenergie-Audiosegmenten aus den Audiosegmenten;
Bestimmen, dass ein erstes Hochenergie-Audiosegment Sprache beinhaltet, und Bestimmen, ob die Sprache als die Sprache von Benutzern des Systems erkannt wird;
Bestimmen, dass ein zweites Hochenergie-Audiosegment die Sprache nicht beinhaltet, und Klassifizieren des zweiten Hochenergie-Audiosegments als ein interessantes Geräusch oder ein uninteressantes Geräusch; und
Bestimmen, ob Video eingeschaltet werden soll, auf der Grundlage der Klassifikation des zweiten Hochenergie-Audiosegments als das interessante Geräusch, von Spracherkennung der Sprache als die Sprache der Benutzer des Systems und von kontextuellen Daten, wobei,
falls die Klassifikation des zweiten Hochenergie-Audiosegments das interessante Geräusch umfasst, in dem ersten Hochenergie-Audiosegment die Sprache als die Sprache der Benutzer des Systems (100) erkannt wird und die kontextuellen Daten ein abnormales Benutzerverhaltensmuster angeben, die Anweisungen, die, wenn sie durch den Prozessor ausgeführt werden, das System (100) ferner zum Einschalten des Videos veranlassen.

3. Sicherheitssystem (100) nach Anspruch 1 oder Anspruch 2, wobei ein interessantes Geräusch eines oder mehrere davon, dass ein Hund bellt, Glas bricht, ein Baby weint, eine Person fällt, eine Person schreit, ein Autoalarm ertönt, einen lauten Autounfall oder einen Feuerwaffenschuss beinhaltet.

4. Sicherheitssystem (100) nach Anspruch 1 oder Anspruch 2, wobei, falls die Klassifikation des zweiten Hochenergie-Audiosegments das interessante Geräusch umfasst und in dem ersten Hochenergie-Audiosegment die Sprache nicht als die Sprache der Benutzer des Systems (100) erkannt wird, die Anweisungen, die, wenn sie durch den Prozessor ausgeführt werden, das System (100) ferner zum Einschalten des Videos veranlassen.

5. Sicherheitssystem (100) nach Anspruch 1 oder Anspruch 2, wobei, falls die Klassifikation des zweiten Hochenergie-Audiosegments das uninteressante Geräusch umfasst, die Anweisungen, die, wenn sie durch den Prozessor ausgeführt werden, das System (100) ferner zum Ausschalten des Videos oder zum Halten des Videos als ausgeschaltet veranlassen.

6. Verfahren zum Verwenden eines Audioauslösers für Beobachtung in einem Sicherheitssystem, umfassend:
Empfangen eines Audioeingabestreams über ein Mikrofon (104a, 104b);
Aufteilen des Audioeingabestreams in Audiosegmente;
Filtern von Hochenergie-Audiosegmenten aus den Audiosegmenten;
Bestimmen, dass ein erstes Hochenergie-Audiosegment Sprache beinhaltet, und Bestimmen, ob die Sprache als die Sprache von Benutzern des Systems (100) erkannt wird;
Bestimmen, dass ein zweites Hochenergie-Audiosegment die Sprache nicht beinhaltet, und
Klassifizieren des zweiten Hochenergie-Audiosegments als ein interessantes Geräusch oder ein uninteressantes Geräusch; und
Bestimmen, ob Video eingeschaltet werden soll, auf der Grundlage einer Klassifikation des zweiten Hochenergie-Audiosegments als das interessante Geräusch, von Spracherkennung der Sprache als die Sprache der Benutzer des Systems (100) und von kontextuellen Daten, wobei,
falls die Klassifikation des zweiten Hochenergie-Audiosegments das interessante Geräusch umfasst, in dem ersten Hochenergie-Audiosegment die Sprache als die Sprache der Benutzer des Systems (100) erkannt wird und die kontextuellen Daten ein normales Benutzerverhaltensmuster angeben, das Verfahren ferner Ausschalten des Videos oder Halten des Videos als ausgeschaltet, um die Privatsphäre der Benutzer aufrechtzuerhalten, umfasst.

7. Verfahren zum Verwenden eines Audioauslösers für Beobachtung in einem Sicherheitssystem, umfassend:
Empfangen eines Audioeingabestreams über ein Mikrofon (104a, 104b);
Aufteilen des Audioeingabestreams in Audiosegmente;
Filtern von Hochenergie-Audiosegmenten aus den Audiosegmenten;
Bestimmen, dass ein erstes Hochenergie-Audiosegment Sprache beinhaltet, und Bestimmen, ob die Sprache als die Sprache von Benutzern des Systems (100) erkannt wird;
Bestimmen, dass ein zweites Hochenergie-Audiosegment die Sprache nicht beinhaltet, und Klassifizieren des zweiten Hochenergie-Audiosegments als ein interessantes Geräusch oder ein uninteressantes Geräusch; und
Bestimmen, ob Video eingeschaltet werden soll, auf der Grundlage einer Klassifikation des zweiten Hochenergie-Audiosegments als das interessante Geräusch, von Spracherkennung der Sprache als die Sprache der Benutzer des Systems (100) und von kontextuellen Daten, wobei,
falls die Klassifikation des zweiten Hochenergie-Audiosegments das interessante Geräusch umfasst, in dem ersten Hochenergie-Audiosegment die Sprache als die Sprache der Benutzer des Systems (100) erkannt wird und die kontextuellen Daten ein abnormales Benutzerverhaltensmuster angeben, das Verfahren ferner Versetzen der Videomodalität in den Alarmzustand umfasst.

8. Verfahren nach Anspruch 6 oder 7, wobei ein interessantes Geräusch eines oder mehrere davon, dass ein Hund bellt, Glas bricht, ein Baby weint, eine Person fällt, eine Person schreit, ein Autoalarm ertönt, einen lauten Autounfall oder einen Feuerwaffenschuss beinhaltet.

9. Verfahren nach Anspruch 6 oder 7, wobei, falls die Klassifikation des zweiten Hochenergie-Audiosegments das interessante Geräusch umfasst und in dem ersten Hochenergie-Audiosegment die Sprache nicht als die Sprache der Benutzer des Systems (100) erkannt wird, das Verfahren ferner Einschalten des Videos umfasst.

10. Verfahren nach Anspruch 6 oder 7, wobei, falls die Klassifikation des zweiten Hochenergie-Audiosegments das uninteressante Geräusch umfasst, das Verfahren ferner Ausschalten des Videos oder Halten des Videos als ausgeschaltet umfasst.

11. Verfahren nach Anspruch 6 oder Anspruch 7, wobei Klassifizieren des zweiten Hochenergie-Audiosegments als ein interessantes Geräusch oder ein uninteressantes Geräusch Folgendes umfasst:
Extrahieren spektraler Merkmale aus dem zweiten Hochenergie-Audiosegment in vorbestimmten Zeitframes;
Verketten der vorbestimmten Zeitframes mit einem längeren Kontext von ±15 Frames, um ein reicheres Merkmal zu bilden, das zeitliche Variationen aufnimmt; und
Einspeisen des reicheren Merkmals in einen Klassifizierer mit tiefem Lernen, um Klassifikation des zweiten Hochenergie-Audiosegments als das interessante Geräusch oder das uninteressante Geräusch zu ermöglichen.

12. Computerlesbares Medium bzw. mehrere computerlesbare Medien, die einen Satz von Anweisungen umfassen, die, wenn sie durch ein Computingsystem ausgeführt werden, das Computingsystem zum Durchführen des Verfahrens nach einem der Ansprüche 6 bis 11 veranlassen.

## Revendications

1. Système de sécurité (100) doté d'outils d'analyse audio comprenant :
des circuits d'interface réseau destinés à recevoir un flux d'entrée audio par l'intermédiaire d'un microphone (104a, 104b) ;
un processeur couplé aux circuits d'interface réseau ;
un ou plusieurs dispositifs de mémoire couplés au processeur, les un ou plusieurs dispositifs de mémoire comportant des instructions qui, à leur exécution par le processeur, amènent le système (100) à :
diviser le flux d'entrée audio en segments audio ;
filtrer des segments audio de haute énergie des segments audio ;
déterminer qu'un premier segment audio de haute énergie comporte de la parole, et déterminer que la parole est reconnue ou non comme la parole d'utilisateurs du système ;
déterminer qu'un second segment audio de haute énergie ne comporte pas la parole, et
classifier le second segment audio de haute énergie en tant que son intéressant ou son inintéressant ; et
déterminer qu'il convient ou non d'activer une vidéo en fonction de la classification du second segment audio de haute énergie en tant que son intéressant, d'une reconnaissance vocale de la parole en tant que parole des utilisateurs du système, et de données contextuelles, dans lequel
si la classification du second segment audio de haute énergie comprend le son intéressant, dans le premier segment audio de haute énergie la parole est reconnue comme la parole des utilisateurs du système (100), et les données contextuelles indiquent un modèle de comportement d'utilisateur normal, les instructions, à leur exécution par le processeur, amènent en outre le système (100) à désactiver la vidéo ou à la maintenir désactivée pour préserver la confidentialité de l'utilisateur.

2. Système de sécurité (100) doté d'outils d'analyse audio comprenant :
des circuits d'interface réseau destinés à recevoir un flux d'entrée audio par l'intermédiaire d'un microphone (104a, 104b) ;
un processeur couplé aux circuits d'interface réseau ;
un ou plusieurs dispositifs de mémoire couplés au processeur, les un ou plusieurs dispositifs de mémoire comportant des instructions qui, à leur exécution par le processeur, amènent le système (100) à :
diviser le flux d'entrée audio en segments audio ;
filtrer des segments audio de haute énergie des segments audio ;
déterminer qu'un premier segment audio de haute énergie comporte de la parole, et déterminer que la parole est reconnue ou non comme la parole d'utilisateurs du système ;
déterminer qu'un second segment audio de haute énergie ne comporte pas la parole, et classifier le second segment audio de haute énergie en tant que son intéressant ou son inintéressant ; et
déterminer qu'il convient ou non d'activer une vidéo en fonction de la classification du second segment audio de haute énergie en tant que son intéressant, une reconnaissance vocale de la parole en tant que parole des utilisateurs du système, et de données contextuelles, dans lequel
si la classification du second segment audio de haute énergie comprend le son intéressant, dans le premier segment audio de haute énergie la parole est reconnue comme la parole des utilisateurs du système (100), et les données contextuelles indiquent un modèle de comportement d'utilisateur anormal, les instructions à leur exécution par le processeur, amènent en outre le système (100) à activer la vidéo.

3. Système de sécurité (100) selon la revendication 1 ou la revendication 2, dans lequel un son intéressant comprend un ou plusieurs sons parmi un aboiement de chien, un bris de verre, des pleurs de bébé, la chute d'une personne, les cris d'une personne, une alarme de voiture, un accident de voiture bruyant ou un coup de feu.

4. Système de sécurité (100) selon la revendication 1 ou la revendication 2, dans lequel si la classification du second segment audio de haute énergie comprend le son intéressant et dans le premier segment audio de haute énergie la parole n'est pas reconnue comme la parole des utilisateurs du système (100), les instructions, à leur exécution par le processeur, amènent en outre le système (100) à activer la vidéo.

5. Système de sécurité (100) selon la revendication 1 ou la revendication 2, dans lequel si la classification du second segment audio de haute énergie comprend le son inintéressant, les instructions, à leur exécution par le processeur, amènent en outre le système (100) à désactiver la vidéo ou à la maintenir désactivée.

6. Procédé d'utilisation d'un déclencheur audio de surveillance dans un système de sécurité comprenant :
la réception d'un flux d'entrée audio par l'intermédiaire d'un microphone (104a, 104b) ;
la division du flux d'entrée audio en segments audio ;
le filtrage des segments audio de haute énergie des segments audio ;
la détermination qu'un premier segment audio de haute énergie comporte de la parole, et la détermination que la parole est reconnue ou non comme la parole d'utilisateurs du système (100) ;
la détermination qu'un second segment audio de haute énergie ne comporte pas la parole, et la classification du second segment audio de haute énergie en tant que son intéressant ou son inintéressant ; et
la détermination qu'il convient ou non d'allumer une vidéo en fonction de la classification du second segment audio de haute énergie en tant que son intéressant, d'une reconnaissance vocale de la parole en tant que parole des utilisateurs du système, et de données contextuelles,
le procédé comprenant en outre, si la classification du second segment audio de haute énergie comprend le son intéressant, dans le premier segment audio de haute énergie la parole est reconnue comme la parole des utilisateurs du système (100), et les données contextuelles indiquent un modèle de comportement d'utilisateur normal, la désactivation de la vidéo ou son maintien dans l'état désactivé pour préserver la confidentialité de l'utilisateur.

7. Procédé d'utilisation d'un déclencheur audio de surveillance dans un système de sécurité comprenant :
la réception d'un flux d'entrée audio par l'intermédiaire d'un microphone (104a, 104b) ;
la division du flux d'entrée audio en segments audio ;
le filtrage des segments audio de haute énergie des segments audio ;
la détermination qu'un premier segment audio de haute énergie comporte de la parole, et la détermination que la parole est reconnue ou non comme la parole d'utilisateurs du système (100) ;
la détermination qu'un second segment audio de haute énergie ne comporte pas la parole, et la classification du second segment audio de haute énergie en tant que son intéressant ou son inintéressant ; et
la détermination qu'il convient ou non d'activer une vidéo en fonction de la classification du second segment audio de haute énergie en tant que son intéressant, d'une reconnaissance vocale de la parole en tant que parole des utilisateurs du système, et de données contextuelles,
le procédé comprenant en outre, si la classification du second segment audio de haute énergie comprend le son intéressant, dans le premier segment audio de haute énergie la parole est reconnue comme la parole des utilisateurs du système (100), et les données contextuelles indiquent un modèle de comportement d'utilisateur normal, anormal, la mise en état d'alerte d'une modalité vidéo.

8. Procédé selon la revendication 6 ou la revendication 7, dans lequel un son intéressant comprend un ou plusieurs sons parmi un aboiement de chien, un bris de verre, des pleurs de bébé, la chute d'une personne, les cris d'une personne, une alarme de voiture, un accident de voiture bruyant ou un coup de feu.

9. Procédé selon la revendication 6 ou la revendication 7, le procédé comprenant en outre, si la classification du second segment audio de haute énergie comprend le son intéressant et dans le premier segment audio de haute énergie la parole n'est pas reconnue comme la parole des utilisateurs du système (100), l'activation de la vidéo.

10. Procédé selon la revendication 6 ou la revendication 7, le procédé comprenant en outre si la classification du second segment audio de haute énergie comprend le son inintéressant, la désactivation de la vidéo ou son maintien dans l'état désactivé.

11. Procédé selon la revendication 6 ou la revendication 7, dans lequel la classification du second segment audio de haute énergie en tant que son intéressant ou son inintéressant comprend :
l'extraction de caractéristiques spectrales du second segment audio de haute énergie dans des trames de temps prédéterminées ;
la concaténation des trames de temps prédéterminées d'un contexte plus long que +/- 15 trames pour former une caractéristique enrichie qui capture des variations temporelles ; et
la fourniture de la caractéristique enrichie à un classificateur d'apprentissage approfondi pour permettre la classification du second segment audio de haute énergie en tant que son intéressant ou son inintéressant.

12. Au moins un support lisible par ordinateur comprenant un ensemble d'instructions qui, à leur exécution par un système informatique, amènent le système informatique à réaliser le procédé selon l'une quelconque des revendications 6 à 11.
